# EUROPEAN PATENT APPLICATION

(11) **EP 1 672 840 A1**
(43) Date of publication of application: **21.06.2006**
(21) Application number: 05026824.2
(22) Date of filing: 08.12.2005
(51) Int. Cl.: H04L 12/28

(54) **Apparatus and method for controlling traffic between a wireless lan terminal and an access point in a wireless lan**

(30) Priority: 16.12.2004 KR 2004107410
(71) Applicant: Samsung Electronics Co., Ltd., Suwon-si, Gyeonggi-Do (KR)
(72) Inventor: Yoon, Hyun-Min, Jangan-gu Suwon-si Gyeonggi-do (KR); Kim, Soung-Kwan, Yeongtong-gu Suwon-si Gyeonggi-do (KR); Youn, Myeon-Kee, Incheon-si Gyeonggi-do 405-768 (KR); Jeon, Seong-Joon, 2-dong Yongin-si Gyeonggi-do (KR)
(74) Representative: Lang, Johannes

(57) **Abstract**

In an apparatus and a method for controlling traffic for real time service between a wireless local area network (LAN) terminal and an access point in a wireless LAN system, a transceiver transmits and receives a packet to and from the access point, a signal-determination unit determines whether the packet to be transmitted/received via the transceiver is a real time packet, and a signal-controlling unit controls re-transmission according to transmission failure when the packet to be transmitted is determined to be a real time packet by the signal-determination unit. In this way, the invention maintains optimum traffic status in a wireless LAN environment, and lowers the risk of resetting the access point or the wireless LAN terminal. In addition, the invention prevents several coexisting wireless LAN terminals from interfering with real time traffic thereof and from delaying or corrupting voice and image data.

## Description

### BACKGROUND OF THE INVENTION

### Technical Field

The present invention relates to an apparatus and a method for controlling traffic between a wireless local area network (LAN) terminal and an access point in a wireless LAN system. More particularly, the invention relates to an apparatus and a method which are adapted to exclude unnecessary re-transmission of real time traffic, thereby improving the efficiency and quality of service (QoS) between terminals, as well as preventing network failure.

### Related Art

In general, information terminals such as personal computers (PC), notebook computers and personal digital assistants (PDA) share information through a so-called Local Area Network (LAN). The LAN can be classified into a wired LAN which directly connects the information terminals through a communication cable or a wireless LAN which connects the information terminals using access points based upon radio communication technique.

Such a wireless LAN can be moved freely, and easily expanded and maintained, since it performs data transmission/reception using a radio frequency (RF) signal or light. The LAN provides a 10/100 BASE-T ethernet interface function of the Institute of Electrical and Electronic Engineers (IEEE) 802.3 standard as a wired processing unit, and a 2Mbps transmission rate in a 2.4GHz frequency band of the IEEE 802.11 standard as a wireless processing unit.

The processing rate of the wireless LAN is determined by the same quality of application products and set up conditions as the wired LAN. Factors influencing the processing rate may include the number of users, channel factors such as range and multipass, the type of wireless LAN system in use, delay and bottleneck at a LAN junction, and so forth.

The international standardization of the wireless LAN progressed due to the IEEE 802.11 committee from October 1990, corresponding to the standard OSI reference model, to physical layer standards for wireless medium access control.

Even though a complete standard has not yet been developed, standardization is progressing as one Medium Access Control (MAC) protocol is shared by several physical layer specifications. As basic transmission technologies discussed so far, there are infrared transmission and radio transmission. Radio transmission adopts a spread spectrum technique that spreads data into a wide frequency band so as to transmit the data without interference.

Such a wireless LAN system includes a wireless LAN terminal functioning as an information terminal of a user to access the wireless LAN system, an access point, a router, a hub and an authentication server providing an Internet service. The access point is located between the wireless LAN terminal and the hub to transmit an Internet access request from the wireless LAN terminal to the authentication server for relay of the wireless LAN communication of the wireless LAN terminal. The router and the hub allow the wireless LAN terminal to access the Internet. Upon failing to transmit a packet from a wireless LAN terminal or the access point, the conventional wireless LAN system is adapted to transmit each frame seven more times.

Therefore, the conventional wireless LAN system attempts to re-transmit a voice packet seven times upon failing to transmit the voice packet. However, since every voice packet is generally sent by wireless every 10ms or 20ms, network conditions may heavily worsen or voice and/or image data may be delayed or corrupted if several terminals perform re-transmission up to seven times.

This will have an effect on every terminal. Therefore, in order to prevent such an effect, each terminal or access point may skip re-transmission and thus maintain optimum network conditions.

Furthermore, effectively controlled network traffic is necessary to ensure traffic quality (prevent delayed or corrupted voice and/or image data) between VoIP terminals and visual communication terminals (devices using real time traffic) in an 802.11 wireless LAN environment so as to support service quality as well as prevent network failure.

Voice and real time visual terminals are multimedia terminals which can perform a voice and image communication function, as well as transmit/receive data such as SMS and MMS.

Real time traffic using the wireless LAN applies a heavy load to a network, which as a problem causes a failure to the network.

As described above, since all traffic is transmitted up to seven times before receiving an Ack signal in accordance with the 802.11 wireless LAN environment, real time traffic generates problems. This also may cause failure to the network owing to re-transmission or the AP and terminals have to be reset.

### SUMMARY OF THE INVENTION

The present invention has been made to solve the foregoing problems. Therefore, it is an object of the present invention to provide an apparatus and a method for controlling traffic between a wireless local area network (LAN) terminal and an access point in a wireless LAN system, the apparatus and method being adapted to compare a specific bite of all frames entering a wireless LAN device driver to discriminate voice, image and data packets, and to enable an option of excluding specific frames from re-transmission, thereby improving the efficiency and QoS between terminals, as well as preventing network failure.

According to an aspect of the invention for realizing the above objects, there is provided an apparatus for controlling traffic for real time service between a wireless LAN terminal and an access point in a wireless LAN system, comprising: a transceiver for transmitting/receiving a packet to/from the access point; a signal-determining unit for determining whether the packet to be transmitted/received via the transceiver is a real time packet; and a signal-controlling unit for controlling re-transmission according to transmission failure when the packet to be transmitted is determined to be a real time packet by the signal-determining unit.

According to another aspect of the invention for realizing the above objects, there is provided a method for controlling traffic for real time service between a wireless LAN terminal and an access point in a wireless LAN system, the method comprising the steps of: determining whether a packet to be transmitted to the access point is a real time packet; when the packet to be transmitted is determined to be a real time packet in the determining step, controlling re-transmission according to transmission failure.

According to a further aspect of the invention for realizing the above objects, there is provided an apparatus for controlling traffic for real time service between a wireless LAN terminal and an access point in a wireless LAN system, comprising: a transceiver for transmitting/receiving a packet to/from the wireless LAN terminal; a signal-determination unit for determining whether the packet to be transmitted via the transceiver is a real time packet; and a signal-controlling unit for controlling re-transmission according to transmission failure when the packet to be transmitted is determined to be a real time packet by the signal-determination unit.

According to another aspect of the invention for realizing the above objects, there is provided a method for controlling traffic for real time service by an access point in a wireless LAN system, in which the access point transmits/receives packets to/from a wireless LAN terminal in the wireless LAN system, the method comprising the steps of: (a) determining whether a packet to be transmitted to the wireless LAN terminal is a real time packet; and (b) if the packet to be transmitted is determined to be a real time packet in determining step (a), controlling re-transmission according to transmission failure.

According to another aspect of the invention for realizing the above objects, there is provided an apparatus for controlling traffic between at least one wireless LAN terminal and an access point in a wireless LAN system, the apparatus comprising: a first signal-determination unit in the wireless LAN terminal for determining whether or not a first packet to be transmitted is a real time packet; a first signal-controlling unit in the wireless LAN terminal for controlling re-transmission according to transmission failure when the first packet to be transmitted is determined to be a real time packet by the first signal-determination unit; a second signal-determination unit in the access point for determining whether a second packet to be transmitted is a real time packet; and a second signal-controlling unit in the access point for controlling re-transmission according to transmission failure when the second packet to be transmitted is determined to be a real time packet by the second signal-determination unit.

According to a further aspect of the invention for realizing the above objects, there is provided a method for controlling traffic for real time service between wireless LAN terminals and an access point in a wireless LAN system, the method comprising the steps of: (a) determining, at a first wireless LAN terminal, whether any other wireless LAN terminal attempts to re-transmit a packet to the access point; (b) if it is determined that there is no other wireless LAN terminal attempting to re-transmit a packet to the access point by the determining step, determining, at the first wireless LAN terminal, whether the packet to be transmitted to the access point is a real time packet; and (c) when the packet to be transmitted to the access point is determined to be a real time packet in step (b), controlling, by means of the first wireless LAN terminal, packet re-transmission according to transmission failure.

### BRIEF DESCRIPTION OF THE DRAWINGS

A more complete appreciation of the invention, and many of the attendant advantages thereof, will be readily apparent as the same becomes better understood by reference to the following detailed description when considered in conjunction with the accompanying drawings in a which like reference symbols indicate the same or similar components, wherein:
FIG. 1 is a functional block diagram of a wireless local area network (LAN) system in network connection;
FIG. 2 is a functional block diagram of a traffic controlling apparatus in a wireless LAN terminal according to a first embodiment of the invention;
FIG. 3 is a functional block diagram of a traffic controlling apparatus in an access point according to the first embodiment of the invention;
FIG. 4 is a flowchart of a traffic controlling method for real time service in the wireless LAN terminal according to the first embodiment of the invention;
FIG. 5 is a flowchart of a traffic controlling method for real time service in the access point according to the first embodiment of the invention;
FIG. 6 is a flowchart of a traffic controlling method for real time service between a wireless terminal and an access point according to a second embodiment of the invention; and
FIG. 7 is a diagram of a packet to be transmitted/received in a wireless LAN system of the invention.

### DETAILED DESCRIPTION OF THE INVENTION

The following is a detailed description of an apparatus and a method for controlling traffic between a wireless local area network (LAN) terminal and an access point in a wireless LAN system according to a first embodiment of the invention with reference to the accompanying drawings.

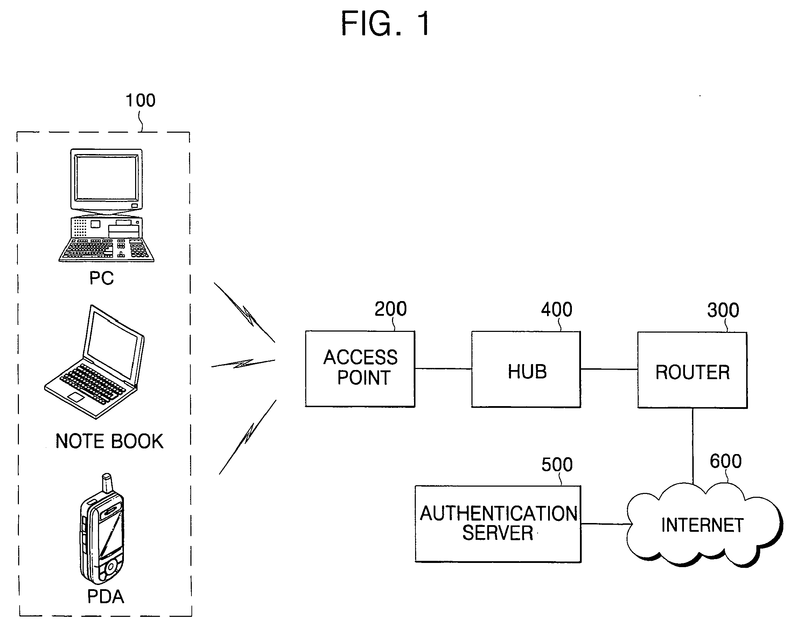

FIG. 1 is a functional block diagram of a wireless LAN system in network connection.

Referring to FIG. 1, a wireless LAN system includes a wireless LAN terminal 100 functioning as an information terminal of a user to access the wireless LAN system, an access point 200, a router 300, a hub 400 and an authentication server 500 providing Internet service. The access point 200 is located between the wireless LAN terminal 100 and the hub 400 for transmitting an Internet access request from the wireless LAN terminal 100 to the authentication server 500 so as to relay a wireless LAN communication of the wireless LAN terminal 100. The router 300 and the hub 400 allow the wireless LAN terminal 100 to access the Internet 600. Upon failing to transmit a packet from a wireless LAN terminal 100 or the access point 200, the wireless LAN system is adapted to transmit each frame seven more times.

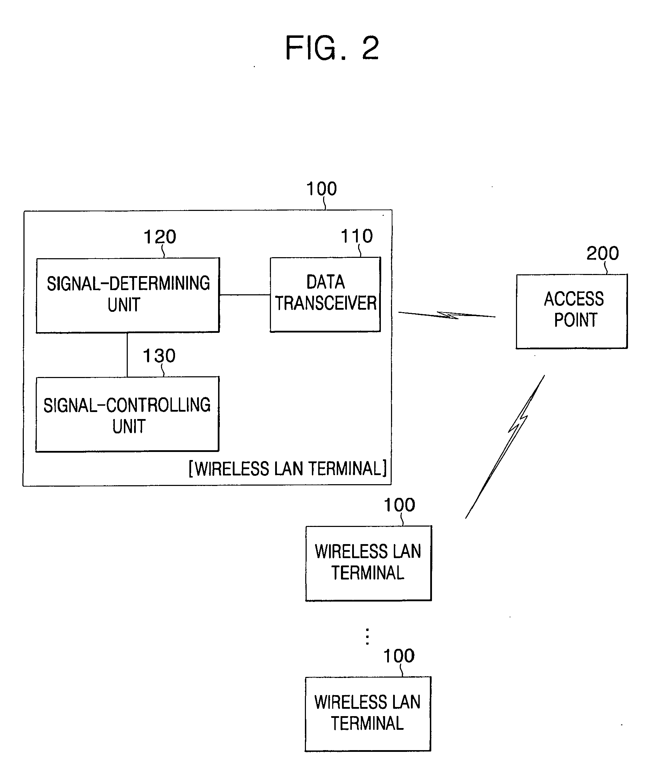

FIG. 2 is a functional block diagram of a traffic controlling apparatus in a wireless LAN terminal according to a first embodiment of the invention.

Referring to FIG. 2, each wireless LAN terminal 100 has a traffic controlling apparatus which includes a data transceiver 110, a signal-determining unit 120 and a signal-controlling unit 130.

The data transceiver 110 of the wireless LAN terminal 100 is adapted to transmit/receive voice and data packets to/from the access point 200.

The signal-determining unit 120, of the wireless LAN terminal 100 determines whether a packet transmitted to the access point 200 by the data transceiver 110 is a voice packet or a data packet. In this case, the signal-determining unit 120 differentiates the voice packet from the data packet via an RTP payload of G.729. The signal-determining unit 120 can differentiate packets in real time according to RTP payload G.729, G.711 or G.723.

The signal-controlling unit 130 of the wireless LAN terminal 100 is adapted to control re-transmission according to transmission failure if a packet to be transmitted is determined by the signal-determining unit 120 to be a voice packet. That is, if the packet to be transmitted is a voice packet and its transmission to the access point 200 fails, the signal-controlling unit 130 discards the voice packet and transmits a next voice or data packet on standby.

If the time point of a failed voice packet can be adjusted by a manager, its adjustment number can be determined among one to six times.

While the above discussion relates to voice packets, real time image packets are processed in the same manner as the voice packets.

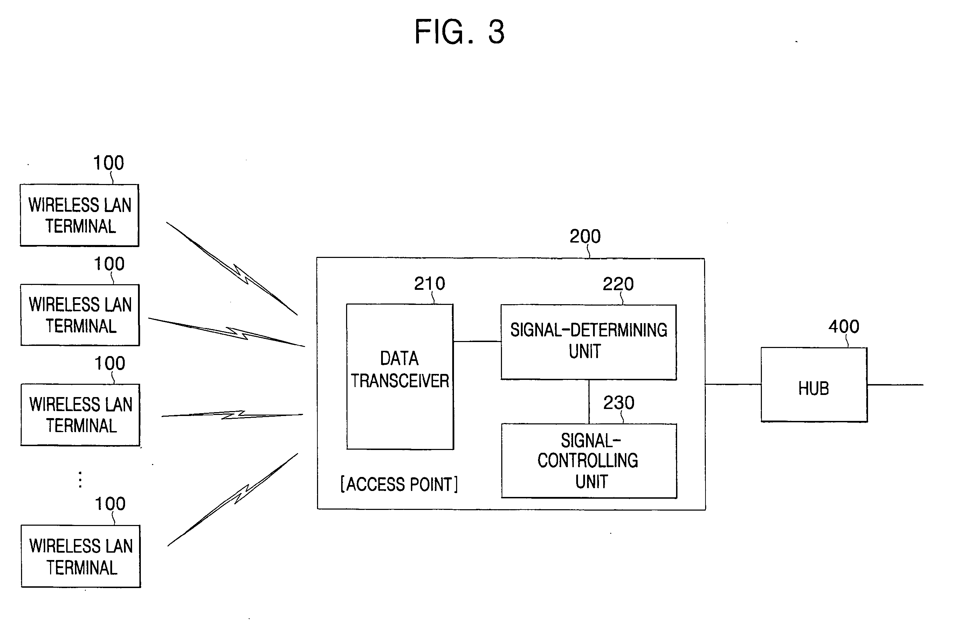

FIG. 3 is a functional block diagram of a traffic controlling apparatus in an access point according to the first embodiment of the invention.

Referring to FIG. 3, the traffic controlling apparatus in the access point 200 includes a data transceiver 210, a signal-determining unit 220, and a signal-controlling unit 230.

The data transceiver 210 of the access point 200 is adapted to transmit/receive voice and data packets to/from the wireless LAN terminal 100.

The signal-determining unit 220 of the access point 200 is adapted to determine whether a packet to be transmitted to the wireless LAN terminal 100 via the data transceiver 210 is a voice packet or a data packet.

The signal-controlling unit 230 of the access point 200 is adapted to control re-transmission according to transmission failure when the packet to be transmitted is determined by the signal-determining unit 220 to be a voice packet.

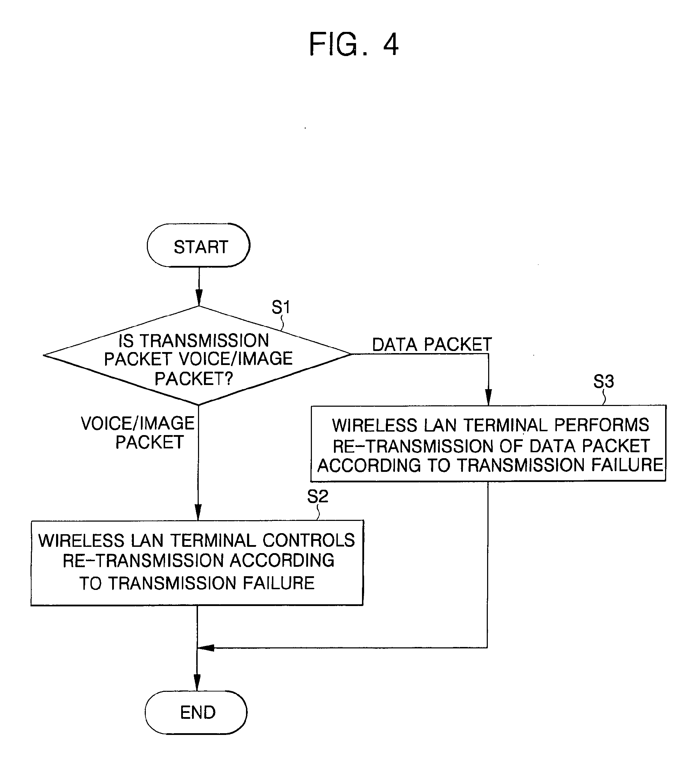

A traffic controlling method for real time service between a wireless terminal and an access point in the previously discussed wireless LAN system will now be described with reference to FIG. 4, which is a flowchart of a traffic controlling method for real time service in the wireless LAN terminal according to the first embodiment of the invention.

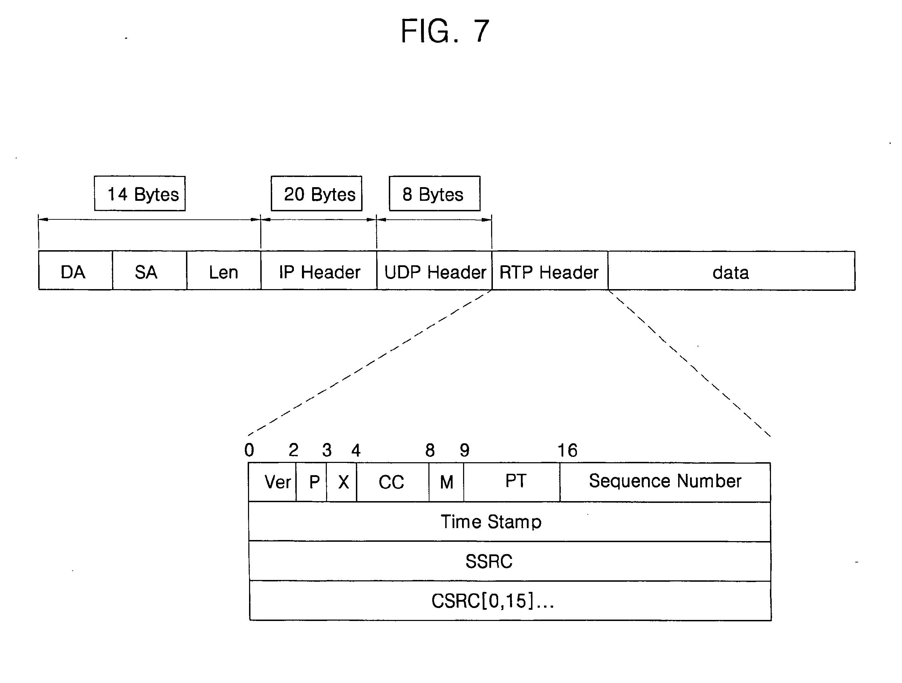

Referring to FIG. 4, the wireless LAN terminal 100 determines whether a packet to be transmitted to the access point 200 is a voice packet at step S 1. The frame transmitted/received on a wireless LAN module generally has a specific format. In the invention, the F/W of a MAC chip removes the 802.11 header from a received frame, and delivers the frame in 802.3 frame format. Also, the F/W adds an 802.11 header to a frame to be transmitted, and then delivers the frame to a MAC chip. That is, the wireless LAN terminal has a format as shown in FIG. 7. Therefore, a packet to be transmitted/received by the wireless LAN terminal 100 includes an 802.3 header frame of 14 bytes (the 802.3 header includes destination (DA), source (SA) and length (Len) information), and consists of an IP header of 20 bytes, a UDP header of 8 bytes, an RTP header and a data frame. The RTP header can be classified into frames indicating voice, image and data packets.

If the packet to be transmitted is determined to be a voice packet at step S1 of FIG. 4, the wireless LAN terminal 100 controls re-transmission according to transmission failure at step S2.

If the packet to be transmitted is determined to be a data packet in step S1, the wireless LAN terminal 100 performs the re-transmission of the data packet according to transmission failure in S3.

Such traffic control of packets by the wireless LAN terminal 100 can be also performed by the access point 200.

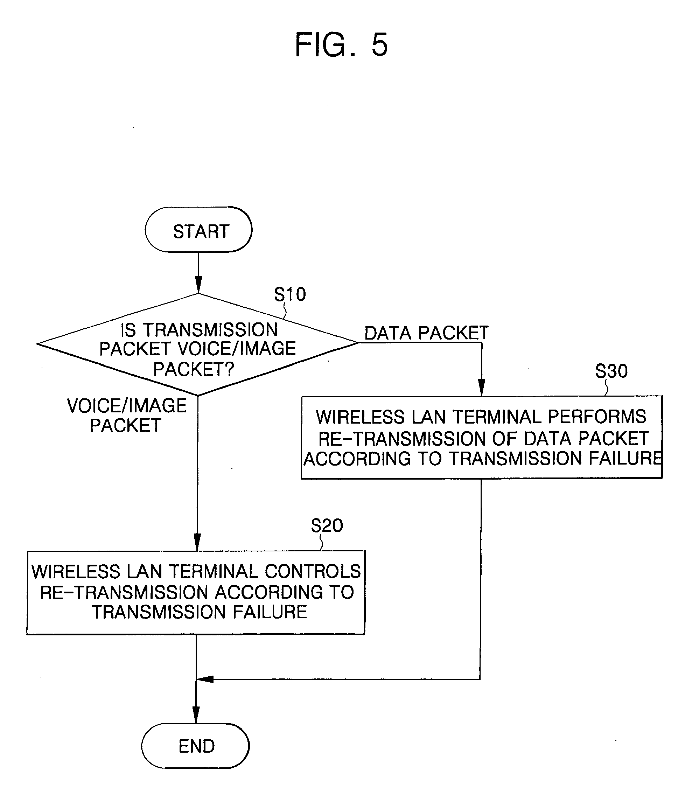

A traffic controlling method for real time service between the wireless terminal and the access point in the wireless LAN system according to the first embodiment of the invention will now be described with reference to FIG. 5, which is a flowchart of a traffic controlling method for real time service in the access point according to the first embodiment of the invention.

The access point 200 determines whether a packet to be transmitted to the wireless LAN terminal 100 is a voice packet at step S10.

If the packet to be transmitted is determined to be a voice packet at step S10, the access point 200 controls packet re-transmission according to transmission failure at step S20.

On the other hand, if the packet to be transmitted is determined to be a data packet in step S10, the access point 200 performs the re-transmission of a data packet according to transmission failure at step S30.

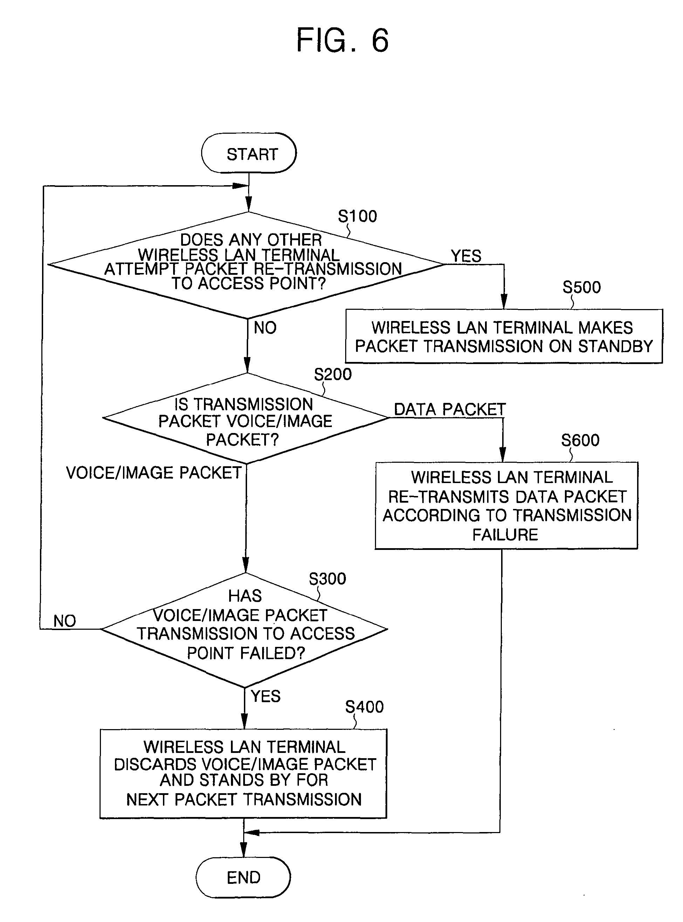

A traffic controlling method for real time service between a wireless terminal and an access point according to a second embodiment of the invention will now be described in detail with reference to FIG. 6, which is a flowchart of a traffic controlling method for real time service between a wireless terminal and an access point according to a second embodiment of the invention, while FIG. 7 is a diagram of a packet to be transmitted/received in a wireless LAN system of the invention.

Referring to FIG. 6, in general, the packet transmission/reception of the wireless LAN terminals 100 and the access point 200 is modified from the Carrier Sense Multiple Access/Collision Detection (CSMA/CD) technique of wired LANs used as a MAC protocol. According to this technique, carrier sensing is performed before data transmission by each terminal. If there is a terminal in transmission, random back-off is performed, and if no carrier is sensed, data transmission is performed.

As shown in FIG. 2 or 3, the wireless LAN system basically includes the access point 200 connected by wireless means to the wireless LAN terminals 100.

First, at step S100 of FIG. 6, a first wireless LAN terminal 100 determines whether any other wireless LAN terminal 100 attempts packet re-transmission to the access point 200. This is performed since packet re-transmission has a higher hierarchy than general voice and data packet transmission.

If there is no other wireless LAN terminal 100 attempting packet re-transmission to the access point 200 (NO) as a result of the re-transmission determination step S100, the first wireless LAN terminal 100 determines whether a packet to be transmitted is a voice/image packet at step S200.

If the packet to be transmitted is a voice/image packet, the first wireless LAN terminal 100 determines at step S300 whether voice/image packet transmission to the access point 200 has failed.

If voice/image packet transmission has not failed as determined at step S300, the first wireless LAN terminal 100 proceeds to the re-transmission determination step S100. If voice/image packet transmission has failed, the first wireless LAN terminal 100 discards the voice/image packet which was not transmitted, and then stands by for a next packet transmission at step S400.

In other arrangement, the wireless LAN terminals 100 would attempt re-transmission up to seven times upon failing to transmit a voice packet to the access point 200, and this leads to packet transmission delay in the wireless LAN terminals 100. Therefore, step S400 of the invention reduces the number of voice packet re-transmissions or discards a voice packet which has failed in transmission in order to avoid delay in packet transmission which has been a problem in prior systems.

Conversely, further referring to FIG. 6, if there is any other wireless LAN terminal 100 which attempts to re-transmit a packet to the access point 200 (YES) as determined at step S 100, the first wireless LAN terminal 100 makes packet transmission on standby at step S500.

If a packet to be transmitted is a data packet as a result of the determination at step S200, the first wireless LAN terminal 100 re-transmits the data packet according to transmission failure at step S600.

According to the invention as described hereinbefore, the apparatus and the method for controlling traffic between a wireless LAN terminal and an access point in a wireless LAN system are adapted to maintain optimum traffic status in a wireless LAN environment, as well to lower the risk of resetting the access point or the wireless LAN terminal. In addition, this invention can prevent such problems in that several coexisting wireless LAN terminals interfere with real time traffic, thereby delaying or corrupting voice and image data.

While the present invention has been shown and described in connection with preferred embodiments, it will be apparent to those skilled in the art that modifications and variations can be made without departing from the spirit and scope of the invention as defined by the appended claims.

## Claims

1. A wireless local area network (LAN) terminal for controlling traffic for real time service in a wireless LAN system, said wireless LAN terminal transmitting and receiving packets to and from an access point in the wireless LAN system, said wireless LAN terminal comprising:
a transceiver for transmitting and receiving a packet to and from the access point;
a signal-determining unit for determining whether the packet is a real time packet; and
a signal-controlling unit for controlling re-transmission according to transmission failure when the packet is determined to be a real time packet by said signal-determining unit.

2. The wireless LAN terminal according to claim 1, wherein said signal-determining unit determines the packet to be a real time packet according to one of a G.729 payload, a G.711 payload and a G.723 RTP payload.

3. The wireless LAN terminal according to claim 1, wherein the real time packet is at least one of an image packet and a voice packet.

4. The wireless LAN terminal according to claim 1, wherein said signal-controlling unit discards a real time packet upon failing to transmit the real time packet to the access point, and performs a next packet transmission on standby.

5. A method for controlling traffic for real time service by a wireless local area network (LAN) terminal in a wireless LAN system, wherein the wireless LAN terminal transmits and receives packets to and from an access point, the method comprising the steps of:
(a) determining whether a packet to be transmitted to the access point is a real time packet; and
(b) when the packet to be transmitted is determined in step (a) to be a real time packet, controlling re-transmission according to transmission failure.

6. The method for controlling traffic according to claim 5, further comprising the step of re-transmitting a non-real time packet according to transmission failure when the packet to be transmitted is determined to not be a real time packet in step (a).

7. The method for controlling traffic according to claim 5, wherein the real time packet determined in step (a) comprises at least one of an image packet and a voice packet.

8. The method for controlling traffic according to claim 5, wherein step (a) comprises differentiating real time packets according to one of a G.729 payload, a G.711 payload and a G.723 RTP payload.

9. An access point for controlling traffic for real time service in a wireless local area network (LAN) system, the access point transmitting and receiving packets to and from a wireless LAN terminal in said wireless LAN system, said access point comprising:
a transceiver for transmitting and receiving a packet to and from said wireless LAN terminal;
a signal-determination unit for determining whether the packet is real time packet; and
a signal-controlling unit for controlling re-transmission according to transmission failure when the packet is determined to be a real time packet by said signal-determination unit.

10. The access point according to claim 9, wherein said signal-determination unit determines the real time packet according to one of a G.729 payload, a G.711 payload and a G.723 RTP payload.

11. The access point according to claim 9, wherein the real time packet is at least one of an image packet and a voice packet.

12. The access point according to claim 9, wherein said signal-controlling unit discards a real time packet upon failing to transmit the real time packet to said wireless LAN terminal, and performs a next packet transmission on standby.

13. A method for controlling traffic for real time service by an access point in a wireless local area network (LAN) system, wherein the access point transmits and receives packets to and from a wireless LAN terminal in the wireless LAN system, the method comprising the steps of:
(a) determining whether a packet to be transmitted to the wireless LAN terminal is a real time packet; and
(b) when the packet is determined to be a real time packet in step (a), controlling re-transmission according to transmission failure.

14. The method for controlling traffic according to claim 13, further comprising the step of re-transmitting a non-real time packet according to transmission failure when the packet is determined to not be a real time packet in step (a).

15. The method for controlling traffic according to claim 13, wherein the real time packet in step (a) comprises at least one of an image packet and a voice packet.

16. The method for controlling traffic according to claim 13, wherein step (a) comprises differentiating real time packets according to one of a G.729 payload, a G.711 payload and a G.723 RTP payload.

17. An apparatus for controlling traffic between at least one wireless local area network (LAN) terminal and an access point in a wireless LAN system, said apparatus comprising:
a first signal-determination unit in said wireless LAN terminal for determining whether a first packet to be transmitted is a real time packet;
a first signal-controlling unit in said wireless LAN terminal for controlling re-transmission according to transmission failure when the first packet to be transmitted is determined to be a real time packet by said first signal-determination unit;
a second signal-determination unit in said access point for determining whether a second packet to be transmitted is a real time packet; and
a second signal-controlling unit in said access point for controlling re-transmission according to transmission failure when the second packet to be transmitted is determined to be a real time packet by said second signal-determination unit.

18. The apparatus for controlling traffic according to claim 17, wherein said first signal-determination unit of said wireless LAN terminal determines the real time packet according to one of a G.729 payload, a G.711 payload and a G.723 RTP payload.

19. The apparatus for controlling traffic according to claim 17, wherein said first signal-controlling unit of said wireless LAN terminal discards a real time packet upon failing to transmit the real time packet to said access point, and performs a next packet transmission on standby.

20. The apparatus for controlling traffic according to claim 17, wherein said second signal-determination unit of said access point determines the real time packet according to one of a G.729 payload, a G.711 payload and a G.723 RTP payload.

21. The apparatus for controlling traffic according to claim 17, wherein said second signal-controlling unit of said access point discards a real time packet upon failing to transmit the real time packet to said wireless LAN terminal, and performs a next packet transmission on standby.

22. The apparatus for controlling traffic according to claim 17, wherein the real time packet comprises at least one of a voice packet and an image packet.

23. A method for controlling traffic for real time service between wireless local area network (LAN) terminals and an access point in a wireless LAN system, the method comprising the steps of:
(a) determining, at a first wireless LAN terminal, whether any other wireless LAN terminal attempts to re-transmit a packet to the access point;
(b) when it is determined in step (a) that no other wireless LAN terminal attempts to re-transmit a packet to the access point, determining, at the first wireless LAN terminal, whether the packet to be transmitted to the access point is a real time packet; and
(c) when the packet to be transmitted to the access point is a real time packet as determined in step (b), controlling, at the first wireless LAN terminal, packet re-transmission according to transmission failure.

24. The method for controlling traffic according to claim 23, wherein step (c) comprises:
(i) determining, at the first wireless LAN terminal, whether real time packet transmission to the access point has failed; and
(ii) when real time packet transmission is determined in step (i) to be successful, proceeding to step (a), and when real time packet transmission is determined in step (i) to have failed, discarding a real time packet which the first wireless LAN terminal failed to transmit.

25. The method for controlling traffic according to claim 23, further comprising the step of:
when it is determined at step (a) that there is any other wireless LAN terminal attempting to re-transmit a packet to the access point, performing at the wireless LAN terminal a packet transmission on standby.

26. The method for controlling traffic according to claim 23, further comprising the step of:
when the packet to be transmitted is determined at step (b) to be a data packet, re-transmitting the data packet according to transmission failure.

27. The method for controlling traffic according to claim 23, wherein the real time packet determined in step (b) comprises at least one of an image packet and a voice packet.

28. The method for controlling traffic according to claim 23, wherein step (b) comprises determining the real time packet according to one of a G.729 payload, a G.711 payload and a G.723 RTP payload.
